# EUROPEAN PATENT APPLICATION

(11) **EP 4 711 734 A1**
(43) Date of publication of application: **18.03.2026**
(21) Application number: 25200054.2
(22) Date of filing: 03.09.2025
(51) Int. Cl.: G01M 15/14

(54) **INSERTION TOOL WITH GRIP MECHANISM**

(30) Priority: 13.09.2024 US 202463694385 P
(71) Applicant: General Electric Company, Cincinnati, Ohio 45215 (US); Oliver Crispin Robotics Limited, Altrincham, Cheshire WA14 2DT (GB)
(72) Inventor: MONTOYA BLANCO, Raul, Bristol, BS34 7JU (GB); GRAHAM, Andrew Crispin, Bristol, BS34 7JU (GB); FRANCOIS, Tim Henri Ann, Bristol, BS34 7JU (GB)
(74) Representative: Openshaw & Co.

(57) **Abstract**

An insertion tool (102) with an implement gripping mechanism is provided. The insertion tool (102) includes an elongated section (106) defining an implement path (108) extending from a proximal end (110) to a distal end (112), a handle (104) coupled to the proximal end (110) of the elongated section (106), a grip mechanism (132) coupled to the handle (104) and configured to selectively secure an implement (116) inserted into the implement path (108) through the handle (104), and a grip actuator (134) operable to cause the grip mechanism (132) to secure the implement (116) to the handle (104).

## Description

### CROSS-REFERENCE TO RELATED APPLICATIONS

This application claims the benefit of U.S Provisional Patent App. No. 63/694,385, filed September 13, 2024, which is hereby incorporated by reference herein.

### TECHNICAL FIELD

These teachings relate generally to an insertion tool, and more particularly, to an insertion tool for guiding an implement for inspecting an environment and/or performing maintenance operations on a component within the environment, such as within a gas turbine engine.

### BACKGROUND

Confined environments, such as gas turbine engines, require specialized tools for inspection and maintenance. At least certain gas turbine engines include, in serial flow arrangement, a compressor section including a low pressure compressor and a highpressure compressor for compressing air flowing through the engine, a combustor for mixing fuel with the compressed air such that the mixture may be ignited, and a turbine section including a high pressure turbine and a low pressure turbine for providing power to the compressor section.

Within one or more of the sections of the gas turbine engine, openings are defined that facilitate and allow the insertion of tools, such as guide tubes, borescopes and robotic arms. These openings may vary in size and shape, such that specialized insertion tools must be utilized with each annular opening to extend around and through such opening.

### BRIEF DESCRIPTION OF DRAWINGS

Various needs are at least partially met through provision of an insertion tool with grip mechanism described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of a gas turbine engine in accordance with various embodiments of these teachings;
FIG. 2 is a schematic view of a tool assembly for inspecting a gas turbine engine in accordance with various embodiments of these teachings;
FIG. 3 is a cross-sectional view of an insertion tool in accordance with various embodiments of these teachings;
FIG. 4 is a perspective view of the insertion tool of FIG. 3 in accordance with various embodiments of these teachings;
FIG. 5 is an exploded view of the insertion tool of FIG. 3 in accordance with various embodiments of these teachings;
FIG. 6 is a schematic illustration of the insertion tool of FIG. 3 used for inspecting a gas turbine engine in accordance with various embodiments of these teachings; and
FIG. 7 is a schematic view of a tool assembly for inspecting a gas turbine engine in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Rigidizable guide tube (RGT) devices are a type of insertion tool that are utilized to guide implements such as borescopes for inspection and/or repair of devices and components with complex internal pathways, such an as an aircraft engine and/or engine components. In order to effectively identify and/or repair features or defects, an operator needs to be able to obtain clear images from the implement. When using a guide tube to insert an implement into a confined space for inspections, operators often have difficulties holding the guide tube and the implement while simultaneously operating the implement controller. Conventional insertion tools typically require an operator to hold the guide tube handle and the implement while operating the implement controller for capturing images. Because the three devices (the guide tube, the implement, and the implement controller) are difficult to control simultaneously with two hands in current systems, operators often have difficulties in keeping the insertion tool steady and obtaining clear images.

Generally speaking, the approaches provided herein provide an insertion tool and an insertion assembly for performing an inspection, repair, and/or maintenance operation on a component within an environment, such as a space inside a gas turbine engine. More specifically, and discussed in further detail below, the approaches provided herein simplify the simultaneous operation of an insertion tool, an implement, and a separate device, such as an implement controller by a single operator.

In some embodiments, the insertion tool for engine servicing includes an elongated section, a handle, a grip mechanism, and a grip actuator. The elongated section defines an implement path extending from a proximal end to a distal end. The handle is coupled to the distal end of the elongated section. The grip mechanism is coupled to the handle and configured to selectively secure an implement inserted into the implement path through the handle. The grip actuator is operable to cause the grip mechanism to secure the implement to the handle. As used herein, engine servicing generally refers to various tasks associated with servicing an engine, and may include, for example, inspection, cleaning, and/or repair work performed on an engine component.

In some embodiments, after the implement is inserted into the implement path through the handle, the grip actuator may cause the grip mechanism to fix the implement to the handle and/or increase the friction between the handle and the implement to prevent unintentional movement (e.g., axial sliding and rotation) of the implement relative to the insertion tool. Advantageously, in some embodiments, the insertion tool and the implement may be held with one hand, leaving the second hand free to operate other equipment or tools. For example, the grip actuator is configured to be operated with the same hand holding the handle of the insertion tool, or by a foot or by voice, leaving the second hand of the operator free to operate other equipment.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

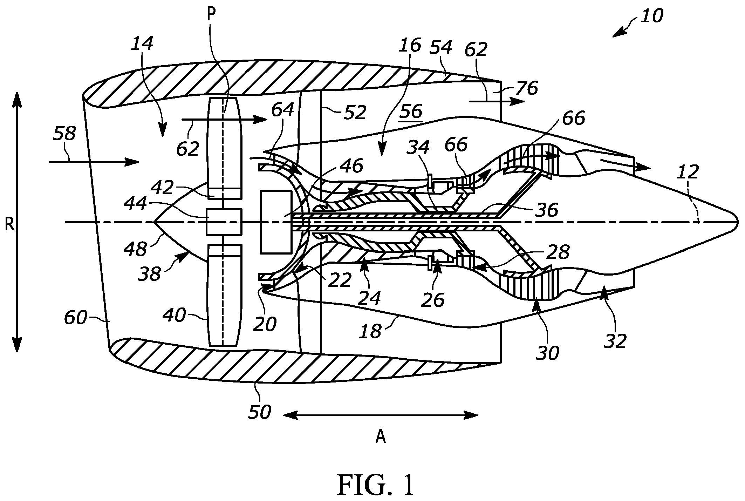

Referring now to the drawings, wherein identical numerals indicate the same elements throughout the figures, FIG. 1 is a cross-sectional view of a gas turbine engine that may be inspected and/or serviced utilizing the insertion tool and tool assembly described herein. The gas turbine engine is a high-bypass turbofan jet engine, referred to herein as "turbofan engine 10." The turbofan engine 10 defines an axial direction A (extending parallel to a longitudinal centerline 12 of the turbofan engine 10 provided for reference) and a radial direction R. In general, the turbofan engine 10 includes a fan section 14 and a core turbine engine 16 disposed downstream from the fan section 14.

The exemplary core turbine engine 16 depicted generally includes a substantially tubular outer casing 18 that defines an annular inlet 20. The tubular outer casing 18 encases, in serial flow relationship, a compressor section including a low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) spool 36 drivingly connects the LP turbine 30 to the LP compressor 22.

The fan section 14 includes a variable pitch fan 38 having a plurality of fan blades 40 coupled to a disk 42 in a spaced apart manner. As depicted, the fan blades 40 extend outwardly from disk 42 generally along the radial direction R. Each of the fan blades 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal centerline 12 by LP spool 36 across a power gear box 46. The power gear box 46 includes a plurality of gears for stepping down the rotational speed of the LP spool 36 to a more efficient rotational fan speed.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the variable pitch fan 38 and/or at least a portion of the core turbine engine 16. It should be appreciated that the outer nacelle 50 may be configured to be supported relative to the core turbine engine 16 by a plurality of circumferentially-spaced outlet guide vanes 52. Moreover, a downstream section 54 of the outer nacelle 50 may extend over an outer portion of the core turbine engine 16 to define a bypass airflow passage 56 therebetween.

During operation of the turbofan engine 10, a volume of air 58 enters the turbofan engine 10 through an associated inlet 60 of the outer nacelle 50 and/or fan section 14. As the volume of air 58 passes across the fan blades 40, a first portion 62 of the air 58 as indicated by arrow is directed or routed into the bypass airflow passage 56 and a second portion 64 of the air 58 as indicated by arrow is directed or routed into the LP compressor 22. The ratio between the first portion 62 of air 58 and the second portion 64 of air 58 is commonly known as a bypass ratio. The pressure of the second portion 64 of air 58 is then increased as it is routed through the HP compressor 24 and into the combustion section 26, where it is mixed with fuel and burned to provide combustion gases 66. Subsequently, the combustion gases 66 are routed through the hot flowpath, or hot-section flowpath, of the HP turbine 28 and the LP turbine 30, where a portion of thermal and/or kinetic energy from the combustion gases 66 is extracted.

The combustion gases 66 are then routed through the jet exhaust nozzle section 32 of the core turbine engine 16 to provide propulsive thrust. Simultaneously, the pressure of the first portion 62 of air 58 is substantially increased as the first portion 62 of air 58 is routed through the bypass airflow passage 56 before it is exhausted from a fan nozzle exhaust section 76 of the turbofan engine 10, also providing propulsive thrust.

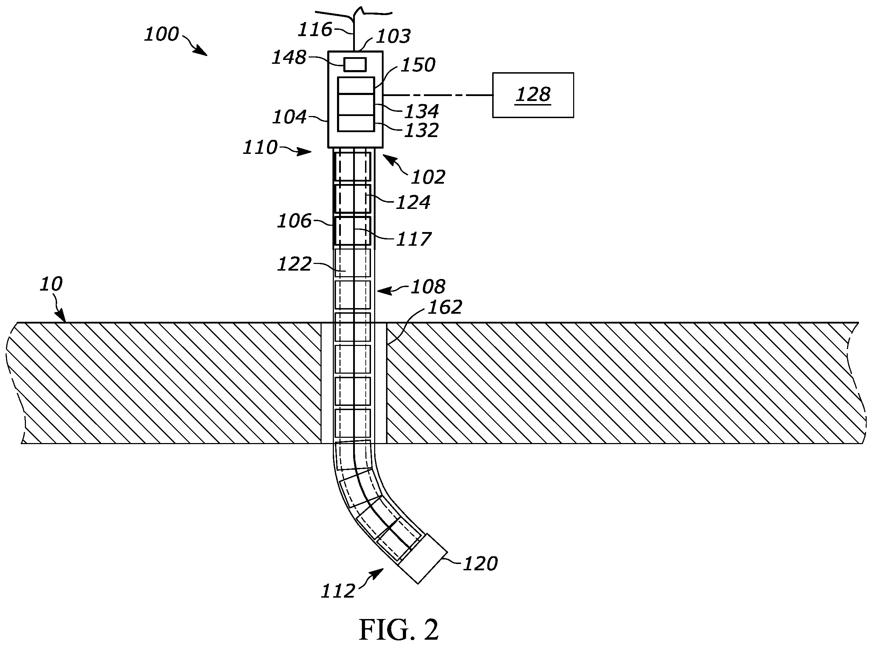

The turbofan engine 10 may also include one or more access ports (e.g., access ports 162 shown in FIG. 2) defined through the outer casing 18 and/or outer nacelle 50 to provide access to the interior of the core turbine engine 16. The access ports may provide access to the compressor section including the LP compressor 22 and the HP compressor 24; the combustion section 26; and the turbine section including the HP turbine 28 and the HP turbine 30. The access ports 62 may allow for inspection of the turbofan engine 10, for example, to allow for inspection or servicing of one or more blades, nozzles, combustion liners, of the engine 10 between operations. It should be appreciated that any suitable number of access ports may be included at any suitable location to provide access to any suitable internal location of the turbofan engine 10. The inspection tool and tool assembly described herein, may be inserted into one or more of the access ports to perform servicing tasks.

It should be appreciated, however, that the exemplary turbofan engine 10 depicted in FIG. 1 is by way of example only, and that in other exemplary embodiments, aspects of the present disclosure may additionally, or alternatively, be applied to any other suitable devices. Generally, the inspection tool and tool assembly described herein may be used to perform inspection or other servicing tasks in a confined space, such as in the spaces between components of an engine, such as the turbofan engine 10.

FIG. 2 is a schematic view of a tool assembly 100 in accordance with various embodiments. The tool assembly 100, which may also be referred to as an engine servicing system, includes an insertion tool 102 and an implement 116. As described in greater detail below, the insertion tool 102 defines one or more passages or conduits therethrough such that the implement 116 may be inserted through the insertion tool 102, also referred to as an implement path. The tool assembly 100, and in particular, the insertion tool 102 may be deployed within a gas turbine engine 10, such as through an access port 162, and the implement 116 may be inserted through the insertion tool 102 and positioned at a specific target location within a confined environment of the gas turbine engine 10 to perform inspection, repair, and/or maintenance operations.

The insertion tool 102 includes a handle 104, an elongated section 106, a grip mechanism 132, and a grip actuator 134. The elongated section 106 defines an implement path 108 extending from a proximal end 110 to a distal end 112. Generally, the end of the tool that is closer to the operator is referred to as the proximal end, and the end of the tool that is closer to the workpiece is referred to as the distal end. The handle 104 is coupled to the proximal end 110 of the elongated section 106 to allow an operator to maneuver the insertion tool 102. The elongated section 106 is maneuverable to navigate the confined environment within the gas turbine engine 10 and guide the insertion of the implement 116 into the confined environment of the gas turbine engine 10 such that an end of the implement 116 at the distal end 112 of the implement path 108 is positioned at an interior position within the gas turbine engine 10 near an area or internal component that is to be accessed, repaired, serviced, etc.

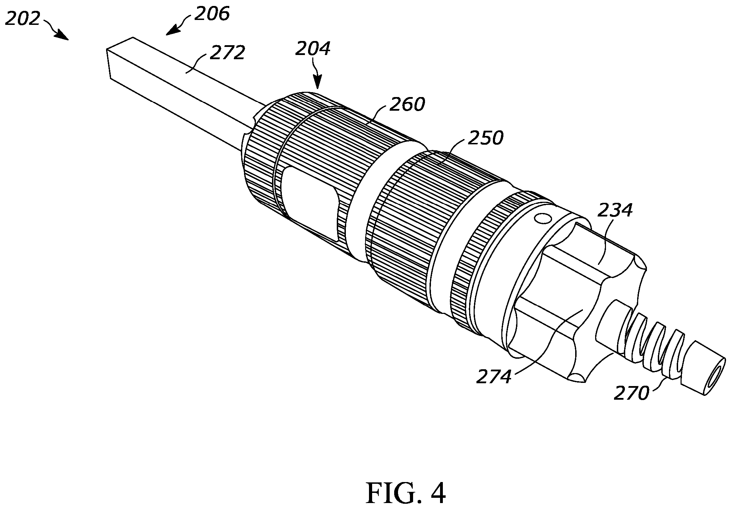

As shown in FIG. 2, in some embodiments, the elongated section 106 may be a rigidizable guide tube, a flexible guide tube, or a rigid guide tube. For example, the flexible guide tube is an elongated conduit or tubular structure capable of bending along its length to navigate through curved or confined pathways, while a rigid guide tube maintains a fixed geometry. In some embodiments, the elongated section 106 may include a rigidizable outer tube and a flexible inner tube. In other embodiments, the elongated section 106 may be a snake-arm robot, a flexible blade rider, and/or any alternate suitable structure. In some embodiments, a guide (e.g., guide 272 as shown in FIG. 4) is coupled between the handle 104 and the elongated section 106 to provide structural support and stability for precise control during insertion and manipulation of the insertion tool 102.

In some embodiments, the elongated section 106 includes a plurality of rigidizable links 122 (one of which is referenced in FIG. 2). For example, the plurality of rigidizable links 122 may be sequentially arranged along the implement path 108 between the proximal and distal ends 110, 112. The plurality of rigidizable links 122 are moveable (e.g., are able to shift, pivot, and/or bend to mention a few examples) with respect to one another. More specifically, the plurality of rigidizable links 122 may be spaced from one another in a non-rigidized (e.g., slacked) position to allow the plurality of rigidizable links 122 to pivotably move relative to one another. When a tensioning force is applied, the plurality of rigidizable links 122 may be pressed against one another in a rigidized (e.g., tensioned) position to rigidly fix the plurality of rigidizable links 122 into one or more predefined shapes. It is generally contemplated that the plurality of rigidizable links 122 may be any suitable links, segments, or components capable of being articulated or rigidized. In some embodiments, the rigidizable links 122 include end features that are configured to engage with each other when tensioned to limit the relative movement of the links with adjacent links. Moreover, the plurality of rigidizable links 122 may include an opening defined along a length thereof. The openings of adjacent links of the plurality of rigidizable links 122 align in the rigidized position to define at least a portion of the implement path 108 for the implement 116 to pass or travel therethrough.

The movement of the plurality of rigidizable links 122 is controlled, in part, by tension members 124, such as ropes, wires, cables, etc., that extend through the plurality of rigidizable links 122 as shown in FIG. 2. In other words, the tension members 124 are operable with the plurality of rigidizable links 122 to move the plurality of rigidizable links 122 between the non-rigidized position and the rigidized position. The tension members 124 extend from a distal termination location in the handle 104. Additionally, or alternatively, the tension members 124 may terminate at various positions in individual links of the plurality of rigidizable links 122 along the elongated section 106, or loop around through one or more of the links to terminate at the proximal end. In some embodiments, the insertion tool 102 includes a rigidization actuator 150 for tensioning the plurality of rigidizable links 122 via the tension members 124. In some embodiments, the rigidization actuator 150 may comprise a rotatable knob, a switch, a button, etc., that actuates the tensioning mechanism electrically, mechanically, and/or pneumatically. For example, the rigidization actuator 150 may pull one or more ropes forming the tensioning members 124 to apply tensioning force on the links 122.

The implement 116 which may include any suitable probe or tool implement is inserted into the handle 104 through an implement inlet 103 at the proximal end of the handle 104, and extends through the handle 104 into the implement path 108 to perform inspection, cleaning, maintenance, service, and/or repair operations within the gas turbine engine 10. The grip mechanism 132 is coupled to the handle 104 and configured to selectively secure the implement 116 inserted into the implement path 108 through the handle 104. Generally, the grip mechanism 132 is a device that prevents or reduces the relative movement between the handle 104 and a connector 117 of the implement 116 when actuated. In operation, once the implement 116 is inserted into a desired position, the grip mechanism 132 may be actuated to fix the axial position (e.g., how far the implement is inserted) and rotational position of the implement 116 relative to the handle 104. The grip mechanism 132 may be released to adjust the position/orientation of the implement 116 and/or to remove the implement from the insertion tool 102.

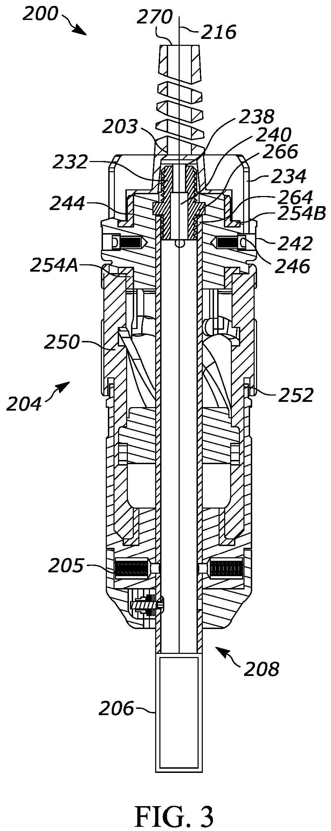

In some embodiments, the grip mechanism 132 may include a compressible elastomer that grips the implement 116 when compressive force is applied as described more fully with respect to FIGS. 3-6. In some embodiments, the grip mechanism 132 may include or otherwise utilize vacuum suction, magnetic attraction, a ring, switchable adhesion, or radial compression to grip and/or secure the implement 116. For example, in one approach, the grip mechanism 132 may include a vacuum pump, such as a continuous pump, or a closed pneumatic system to generate an annular vacuum or pressure differential within the insertion tool 102 surrounding the implement 116 to fix the implement 116 to the handle 104 and/or the insertion tool 102. In another approach, the grip mechanism 132 may include electrically switchable magnets (e.g., electromagnets) or mechanically actuated magnetic elements to generate a magnetic attractive force to fix the implement 116 to the handle 104 and/or the insertion tool 102. In yet another approach, the grip mechanism 132 may include a radially actuated pinch elements, a wedge-driven linear actuator, or a pneumatic hollow rings to generate a radial compression force to fix the implement 116 to the handle 104 and/or the insertion tool 102. In another approach, the grip mechanism 132 may include switchable adhesion components that can be reversibly activated and deactivated to secure or release the implement 116. For example, the switchable adhesion components may include an electro-adhesive pad that may be electrically biased to fix the implement to the handle 104 and/or the insertion tool 102.

While the grip mechanism 132 is generally described as being a part of the handle 104 and/or the insertion tool 102 herein, in some embodiments, the grip mechanism 132 may be integrated partially or entirely with the implement 116. For example, the connector 117 of the implement 116 may include a compressible elastomer and/or a compression mechanism to increase the friction between the implement 116 and the handle 104 via the compression of the elastomer. In another example, the connector 117 of the implement 116 may include a ferromagnetic/magnetic interface for engaging with the electrically switchable magnet on the handle 104. In yet another example, portions of the implement 116 and the handle may form a slot and tab/pin interface that is configured to engage to fix the implement 116 to the handle.

In some embodiments, the grip mechanism 132 may be coupled to one or both of the insertion tool 102 and the implement 116 via releasable coupling interfaces such as mechanical fasteners, bayonet mounts, snap-fit connectors, threaded interfaces, clamps, or other detachable engagement features that permit the grip mechanism 132 to be selectively attached to or detached from the handle 104 and/or the elongated section 106. For example, the grip mechanism 132 may first be secured onto the handle via a releasable coupling interface, and, after the implement 116 is fully inserted, fix the implement 116 to the handle 104 upon actuation of the grip mechanism 132.

The grip actuator 134 is operable to cause the grip mechanism 132 to secure the implement 116 to the handle 104. More specifically, the actuation of the grip actuator 134 results in a mechanical, pneumatic, magnetic, or electrical response that actuates the grip mechanism 132 to fix the implement 116 to the handle 104, thereby preventing relative movement between the implement 116 and the insertion tool 102. In this manner, the inclusion of the grip actuator 134, in part, allows the operator to hold both the handle 104 and the implement 116 and operate the insertion tool 102 with a single operation (e.g., the operator's finger, thumb, hand, foot, knee, etc.). For example, the operator may hold the handle 104 and simultaneously actuate the grip actuator 134 with the same hand to secure the implement 116.

In some embodiments, the grip actuator 134 may include a rotatable knob, a switch, a button, a lever, or a twist mechanism coupled to the handle 104 of the insertion tool 102. In some embodiments, the grip actuator 134 may include a foot switch, a knee-operated switch, or a foot-operated lever (e.g., with a Bowden cable). The foot or knee-operated switch may be mechanically or electrically connected to the grip mechanism 132.

In some embodiments, the grip actuator 134 may be directly actuated via the operator's finger, thumb, hand, foot, knee, etc. as described above, or indirectly actuated by voice control or gesture control. For example, in some embodiments, the grip actuator 134 may include an electrical switch activated by voice control or gesture control. The electrical switch may include a microphone and processor configured to recognize predefined voice commands to actuate the grip mechanism 132. Alternatively, the electrical switch may include one or more sensors to detect specific movements of the operator (e.g., hand or body movements or gestures) and subsequently actuate the grip mechanism 132.

In some embodiments, the grip actuator 134 may be integrated with the implement controller 128. That is, the same mechanical, electrical, or pneumatic device that actuates the grip mechanism 132 may also actuate the tension members 124. For example, the rotation of a knob that compresses a compressible elastomer to apply gripping force may also pull the ropes of the tension members 124 to tension the links of the elongated section 106. In some embodiments, the actuation of the tension members 124 and the grip mechanism 132 may be sequential. For example, the initial rotations of the knob may actuate the tension members 124, and after the links are fully tensioned, the continued rotation then causes the actuation of the grip mechanism 132 to secure the implement 116 to the insertion tool 102. In another example, a single electrical switch may send a signal to tension the tension members 124 and actuate the grip mechanism 132.

In some embodiments, the insertion tool 102 further includes a state indicator device 148 for indicating a state of the grip mechanism 132. The state indicator device 148 may include a color bar, a vacuum switch display, a pressure switch display, a haptic feature, an audio feedback feature, or a light indicator on the handle 104 or a separate device. In this manner, the state indicator device 148 may indicate whether the grip mechanism 132 is currently engaged (e.g., selectively securing the implement 116) or released.

The implement 116 may include any suitable probe or tool implement configured to be inserted within the gas turbine engine 10, with the insertion tool 102, via the access port 162. The implement 116 may include an end effector 120 at the distal end 112 that extends out of the elongated section 106 for performing tasks within the confined environment and a connector 117 that extends through the implement path 108 of the elongated section 106 when inserted into the insertion tool 102. In some embodiments, the end effector 120 includes one or more of an inspection tool, a cleaning tool, a servicing tool, and/or a repair tool. In some embodiments, the implement 116 is a borescope and the end effector 120 is an optical sensor (e.g., camera) for capturing images for an operator to visually inspect the area or internal component within the confined environment of the gas turbine engine 10. It will be appreciated, however, that the implement 116 may include any other suitable implements for inspection, cleaning, maintenance, service, and/or repair operations. For example, the implement 116 may be other types of optical probes or tools such as a vacuum, a spray tube, a grasper, a file, a drill, to mention a few examples. Additionally, or alternatively, the insertion tool 102 may include various other tool implements for performing maintenance, service, and/or repair operations, such as, for example, cleaning, drilling, welding, heating, cooling, etc. In some embodiments, the connector 117 is configured to transmit one or more of control signals, electrical power, pneumatic energy, and mechanical energy from the proximal end of the tool assembly 100 to the end effector 120.

In some embodiments, the tool assembly 100 may include an implement controller 128. The implement controller 128 is operably coupled to the implement 116 for controlling the operation thereof. The implement controller 128 may be located on the tool assembly 100 or may be separated or separable from the insertion tool 102. For example, the implement controller 128 may send signals to the borescope to capture images and/or change camera settings (e.g., zoom, exposure, etc.). In another example, the implement controller 128 may be operated to turn on and off end effectors 120 such as a fluid spray head, a rotating brush, a filing tool, a drilling tool, etc. In some embodiments, the grip mechanism 132 may be part of an adapter that can couple the handle 104 to multiple different implements 116 and/or implement controller 128. For example, the grip mechanism 132 may be configured to grip/engage with both the cable sleeve of a borescope and a fluid tube of a foam sprayer.

FIG. 3 is a cross-sectional view of a portion of an insertion tool 202 in accordance with various embodiments. Generally, the insertion tool 202 is an embodiment of the insertion tool 102 described with reference to FIG. 2, and components of the insertion tool 202 that share the same name as components described with reference to FIG. 2 may be considered embodiments of those components. For example, the handle 204, the elongated section 206, the grip mechanism 232, the grip actuator 234, the implement 216, and the rigidization actuator 250 may be embodiments of the handle 104, the elongated section 106, the grip mechanism 132, and the grip actuator 134, the implement 116, and the rigidization actuator 150, described with reference to FIG. 2, respectively.

The insertion tool 202 includes a handle 204, an elongated section 206, a grip mechanism 232, and a grip actuator 234. The handle 204 may be shaped (e.g., ergonomically contoured) to allow an operator to grasp the insertion tool 202. The implement 216 is inserted into the insertion tool 202 through an implement inlet 203 at an end of the handle 204, and into an implement path 208 of the elongated section 206 through the handle 204. The grip mechanism 232 is coupled to the handle 204 and configured to selectively secure the implement 216 (e.g., prevent axial and/or rotational movement of the implement 216 relative to the handle 204). The grip actuator 234 is operable to cause the grip mechanism 232 to secure the implement 216 to the handle 204. In this manner, the grip mechanism 232 grips the implement 216 to allow the operator to hold the insertion tool 202 and the implement 216 with one hand upon actuation of the grip mechanism 232. By actuating the grip actuator 234, the grip mechanism 232 is engaged to enable one-handed control of both the insertion tool 202 and the implement 216.

The handle 204 is coupled to the proximal end of the elongated section 206. The coupling between the handle 204 and the elongated section 206 may be implemented in various forms. For example, in some embodiments, the handle 204 may be fixedly secured or permanently affixed to the proximal end of the elongated section 206. In some embodiments, the handle 204 may be releasably coupled to the proximal end of the elongated section 206 via a coupling member 205, such as, for example, a mechanical fastener, quick-release mechanism, or other suitable releasable attachment mechanism. The elongated section 206 defines the implement path 208 extending from a proximal end to a distal end. In some embodiments, the implement path 208 extends through at least a portion of the handle 204.

In FIG. 3, the grip mechanism 232 is coupled to, and positioned within, the handle 204 and configured to selectively secure the implement 216, such as a borescope, that is inserted into the implement path 208 through the handle 204 as stated above. The grip mechanism 232 may maintain the grip and/or secure the implement 216 when no force is applied to the grip actuator 234. When the grip mechanism 232 is engaged (e.g., increased friction), the orientation/rotation and the axial position of the end effector 120 (see FIG. 2) are fixed or limited relative to the insertion tool 202 without further action from the operator. In other words, during operation, the operator of the insertion tool 202 may operate the grip actuator 234 once to engage the grip mechanism 232 to fix the axial and rotational position of the end effector 120 relative to the insertion tool 202. To rotate or adjust the axial position and/or angular orientation of the end effector 120, the grip actuator 23 may be operated again (e.g., rotated in the opposite direction) to release the grip mechanism 232.

In the embodiment shown in FIG. 3, the grip mechanism 232 includes a compressible elastomer 238 that grips (e.g., frictionally engages and retains) the implement 216 when compressive force is applied. The compressible elastomer 238 may be formed of a resilient, deformable material, such as rubber or silicon, to conform to the outer surface of the implement 216 when compressive force is applied, while maintaining sufficient frictional resistance to inhibit axial and rotational movement of the implement 216. The compressible elastomer 238 defines an axially extending passage 240 through which the implement 216 is inserted such that, upon compression, the compressible elastomer 238 deforms radially inward to engage and fix the implement 216. As one non-limiting example, the implement 216 is a borescope and the end effector (e.g., see FIG. 2) is an optical sensor (e.g., camera). By fixing the implement 216, the optical sensor is held in place and/or still to allow for the optical sensor to capture clear images of the area or internal component being inspected.

In some embodiments, the compressive force may be applied to the compressible elastomer 238 via a rotary screw 264 or a linear compressor. For example, the grip mechanism 232 may include a rotatory screw 264, a nut 266 threadably engaged with the rotatory screw 264, and the compressible elastomer 238. The compressible elastomer 238, the rotatory screw 264, and the nut 266 may be disposed within a housing 244 and positioned concentrically around the implement path 208 through which the implement 216 is inserted. In some embodiments, the insertion tool 202 includes a first sleeve bearing 254A and a second sleeve bearing 254B that align the grip mechanism 232 with the handle 204. In some embodiments, a strain relief guide or sleeve 270 may be provided around the implement inlet 203 to prevent excessive bending and/or damage to the implement 216.

During operation, the compressive force may be applied to the compressible elastomer 238 via the rotatory screw 264 which causes the compressible elastomer 238 to compress radially inward around the implement 216. For example, actuation of the grip actuator 234 transmits a rotational motion to the rotatory screw 264, which may be constrained by the mechanical fasteners 246 to cause the nut 266 to be threadably advanced axially along the rotary screw 264, thereby applying a compression force to the compressible elastomer 238. The compression force causes the compressible elastomer 238 to deform radially inward to grip and secure the implement 216.

While the grip mechanism 232 in FIG. 3 includes a compressible elastomer 238, in other embodiments, the grip mechanism 232 may include or otherwise utilize vacuum suction, magnetic attraction, a ring, switchable adhesion, or radial compression to grip and/or secure the implement 216 as stated above.

In some embodiments, the grip mechanism 232 is coupled to the handle 204 and/or the elongated section 206 via a releasable coupling interface 242. The releasable coupling interface may include, but is not limited to, mechanical fasteners, bayonet mounts, snap-fit connectors, or other detachable engagement features that permit the grip mechanism 232 to be selectively attached to or detached from the handle 204 and/or the elongated section 206.

In some embodiments, the housing 244 may include one or more mounting holes configured to receive mechanical fasteners 246, such as screws or bolts, for coupling the grip mechanism 232 to the handle 204. More specifically, the mechanical fasteners 246 may extend partly through the housing 244 to secure the compressible elastomer 238, and in some embodiments, the rotatory screw 264, and the nut 266 in a fixed axial position relative to the handle 204.

The grip actuator 234 is operable to cause the grip mechanism 232 to secure the implement 216 to the handle 204 as stated above. More specifically, the actuation of the grip actuator 234 results in a mechanical, pneumatic, magnetic, or electrical response that actuates the grip mechanism 232 to fix the implement 216 to the handle 204, thereby preventing relative movement between the implement 216 and the insertion tool 202.

In some embodiments, the grip actuator 234 includes a rotatable thumb knob. The thumb knob is located on and integrated into the handle 204 and allows the operator to actuate the grip mechanism with the same hand that holds the handle 204, allowing at least one hand free to operate other instruments or controller, such as an implement controller. While the grip actuator 234 is shown as a rotatable thumb knob, in other embodiments, the grip actuator 234 may include a switch, a button, a lever, or a twist mechanism on the handle 204, or a foot switch, a knee-operated switch, a foot-operated lever, or a voice/motion activated electrical switch provided separate from the handle 204.

The insertion tool 202 in FIG. 3 further includes a rigidization actuator 250 for tensioning the plurality of rigidizable links 122 (e.g., see FIG. 2). The rigidization actuator 250 is operable to apply a tensioning force to the tension members 124 (e.g., see FIG. 2). When the tension members 124 are tensioned by applying the tensioning force (e.g., a pulling force), the tensioning force presses the plurality of rigidizable links 122 against one another to rigidly fix the plurality of rigidizable links 122 into one or more predefined shapes.

The rigidization actuator 250 is located on the handle 204 of the insertion tool 202 and may be integrated with the handle 204. In some embodiments, the rigidization actuator 250 is coupled to the handle 204 via a releasable coupling interface 252. The rigidization actuator 250 may be coupled to the handle 204 through, for example, a snap-fit or press-fit connection at the releasable coupling interface 252. Additionally, or alternatively, the releasable coupling interface 252 may include mechanical fasteners, or other detachable engagement features to permit removal and/or replacement of the rigidization actuator 250.

In some embodiments, the grip actuator 234 and the rigidization actuator 250 are integrated such that the operation of the grip actuator 234 causes the tensioning of the plurality of rigidizable links 122 (e.g., see FIG. 2). For example, during operation, a single input from the operator may simultaneously cause the rigidization actuator 250 to tension the plurality of rigidizable links 122 (e.g., see FIG. 2) and the grip mechanism 232 to selectively secure the implement 216 via the grip actuator 234. Alternatively, the single input from the operator may first tension the plurality of rigidizable links 122 (e.g., see FIG. 2) via the rigidization actuator 250 and subsequently actuate the grip mechanism 232 via the grip actuator 234, or vice-versa. This integrated actuation reduces the number of discrete operator actions required to transition the insertion tool 202 between the non-rigidized position and the rigidized position, as well as secure the implement 216.

FIG. 4 is a perspective view of the exterior of a portion of the insertion tool 202 of FIG. 3 in accordance with various embodiments. As shown in FIG. 4, the insertion tool 202 includes the handle 204, the elongated section 206, the grip actuator 234, and the rigidization actuator 250 in an integrated assembly. The grip actuator 234 and the rigidization actuator 250 are coupled to the handle 204 and are positioned to enable one-handed operation by the operator. In this embodiment, the grip actuator 234 includes a rotatable knob. The rotatable knob is configured to be actuated by the operator's finger/thumb, while the operator's hand holds on to the handle 204, to cause the grip mechanism 232 (e.g., see FIG. 3) to selectively fix the implement inserted into the insertion tool 202 to the handle 204. The rotatable knob may include ridges 274 or surface texture to increase gripping or friction such that the rotatable knob can be rotated by a thumb or one or more fingers. The rigidization actuator 250 is also rotatable relative to the rest of the handle 204 and the grip actuator 234 to cause the tensioning of the plurality of links (e.g., see FIG. 2) .

In some embodiments, the insertion tool 202 includes surface features 260, such as ribs, grooves, or raised contours, formed on an exterior surface of the handle 204, the rigidization actuator 250 and/or the grip actuator 234 to provide increased friction and grip between the hand of the operator and the handle 204, particularly during manual rotation of the grip actuator 234 and/or the rigidization actuator 250.

In some embodiments, the elongated section 206 includes a guide, such as a square guide 272 positioned within the handle 204. The square guide 272 is configured to be connected to an opening within the plurality of rigidizable links 122 described with respect to FIG. 2.

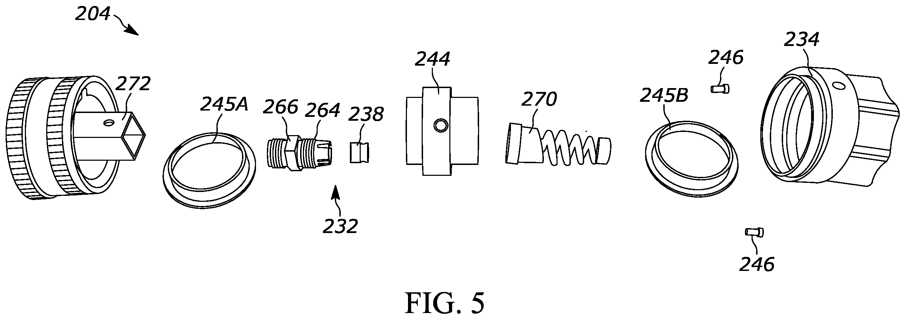

FIG. 5 is an exploded view of the portion of the handle 204 of the insertion tool 202 of FIG. 3 in accordance with various embodiments. As shown in FIG. 5, from left to right, the handle 204 includes the guide 272, the first sleeve bearing 245A, the grip mechanism 232, housing 244, strain relief sleeve 270, the second sleeve bearing 254B, mechanical fasteners 246 (e.g., screws), and the grip actuator 234. The grip mechanism 232 includes the compressible elastomer 238, a rotatory screw 264, and a nut 266. When assembled, the compressible elastomer 238 may be disposed within the housing 244 and positioned concentrically around the axially extending passage 240 through which the implement is inserted. The first and second sleeve bearings 254A, 254B align the grip mechanism 232 with the handle 204. The components in FIG. 5 are generally assembled in the manner depicted in the above figures.

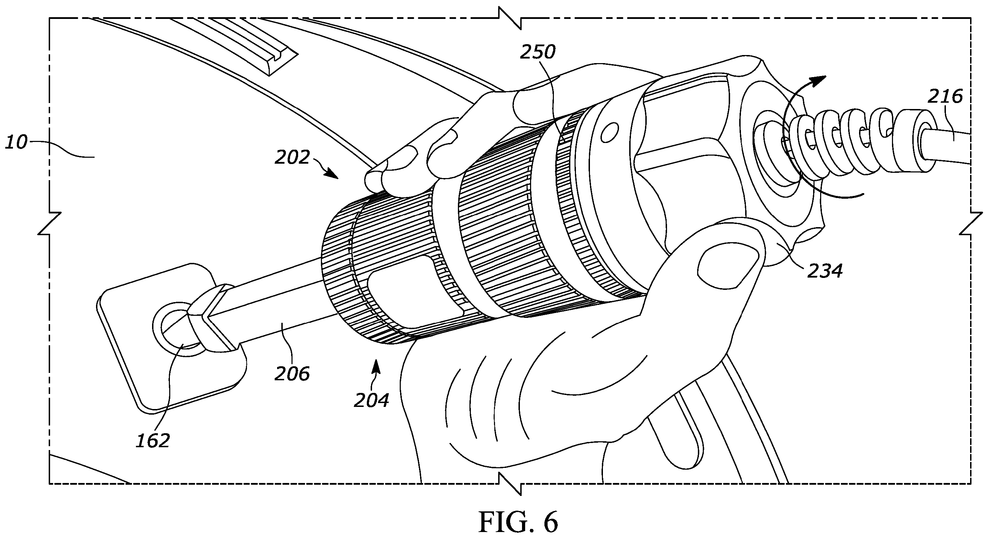

FIG. 6 is a schematic view of the insertion tool 202 during operation in accordance with various embodiments. After the elongated section 206 of the insertion tool 202 is inserted into an access port 162 of a gas turbine engine 10, an operator may rotate the rigidization actuator 250 to tension the plurality of rigidizable links 122 to position the end effector 120 in the confined space of the gas turbine engine 10 as shown in FIG. 2. For example, the operator may hold the handle 204 between their palm and lower finger(s) (e.g., pinky and ring fingers), and use their thumb and pointing finger to rotate the rigidization actuator 250. After the rigidization, the operator may continue to hold the handle 204, including the rigidization actuator 250, with their hand (e.g., between their lower finger(s) and palm) and turn the grip actuator 234 with their thumb/pointer finger to engage the grip mechanism 232 to secure the implement 216 to the handle 204. For example, the thumb of the operator may be placed in a groove or ridge 274 of the grip actuator 234 to apply pressure to hold the implement 216 in place via the grip mechanism 232, such as the compressible elastomer 238. In some embodiments, when the grip mechanism 232 is fully engaged, the tool may provide a visual, audio, and/or haptic feedback to the operator to indicate the implement is secured with the handle, and the thumb may be lifted from the grip actuator 234. To change the axial or rotational position of the implement 216, including the end effector, relative to the insertion tool 202, the operator may rotate the grip actuator 234 in the opposite direction with their thumb while holding onto the handle 204 to release the grip mechanism.

In some embodiments, the grip actuator 234 and the rigidization actuator 250 are integrated so that they rotate at the same time. For example, the operator may hold the handle 204, including the rigidization actuator 250, with their hand (e.g., between their lower finger(s) and palm) and turn the grip actuator 234 with their thumb/pointer finger to engage the grip mechanism 232 to secure the implement 216 to the handle 204, while simultaneously causing the rigidization actuator 250 to rotate, causing the tensioning of the plurality of links (e.g., see FIG. 1).

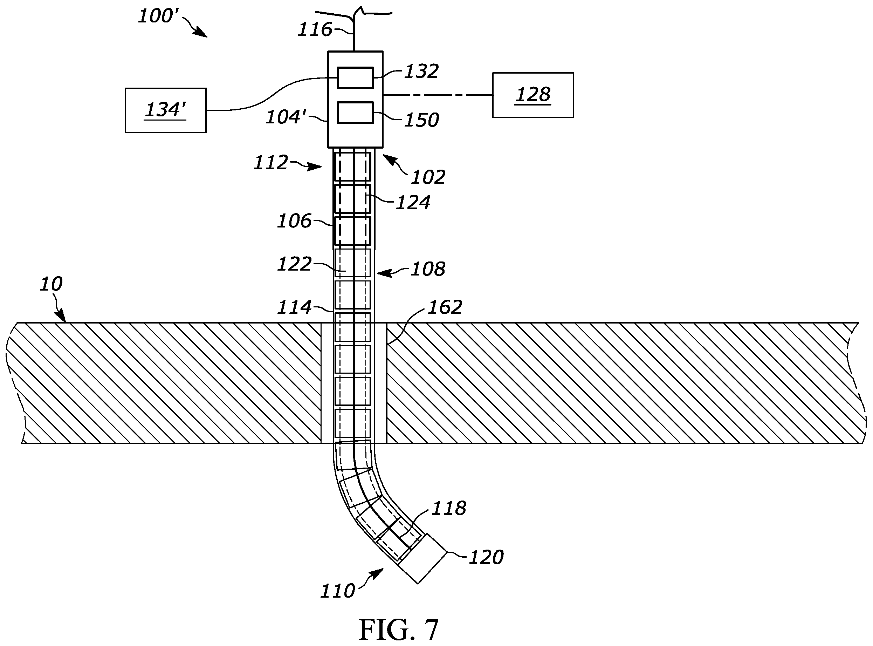

FIG. 7 is a schematic view of a tool assembly 100' in accordance with various embodiments. The tool assembly 100' is similar in many respects to the tool assembly 100 of FIG. 2. The same part numbers refer to the same or similar components as those described in FIG. 2 and only general differences will be discussed.

As shown in FIG. 7, the grip actuator 134' may be located external to the handle 104' and electrically connected to the grip mechanism 132. In this embodiment, the grip actuator 134' includes a switch such as a foot-operated switch, a knee-operated switch, a foot-operated lever, or an electrical switch activated by voice control (e.g., via a microphone and processor to recognize predefined voice commands) or gesture control (e.g., via one or more sensors to detect hand or body movements). The grip actuator 134' may be directly actuated via the operator's knee, foot, or movements thereof to subsequently actuate the grip mechanism 132 as described above.

Generally speaking, pursuant to the various embodiments, systems, apparatuses, and methods are provided herein useful to perform an inspection, repair, and/or maintenance operation on a component within an environment, such as a space inside a gas turbine engine. In some embodiments, the approaches provided herein allow for one-hand control of the insertion tool and implement. As such, in some embodiments, the approaches allow for the grip actuator to be operated with the same hand holding the handle of the insertion tool, leaving the second hand free to operate other equipment. In this manner, the embodiments described herein address the challenges of controlling two or more tools (e.g., the elongated section, the implement, and the implement controller), thereby improving inspection, repair, and/or maintenance operations on the component within the environment.

Further aspects of the disclosure are provided by the subject matter of the following clauses:
An insertion tool for engine servicing is provided. The insertion tool includes an elongated section defining an implement path extending from a proximal end to a distal end; a handle coupled to the proximal end of the elongated section; a grip mechanism coupled to the handle and configured to selectively secure an implement inserted into the implement path through the handle; and a grip actuator operable to cause the grip mechanism to secure the implement to the handle.

The insertion tool of any preceding clause, wherein the elongated section includes a plurality of rigidizable links and the insertion tool further includes a rigidization actuator for tensioning the plurality of links.

The insertion tool of any preceding clause, wherein the rigidization actuator is located on the handle of the insertion tool.

The insertion tool of any preceding clause, wherein the grip actuator and the rigidization actuator are integrated such that the operation of the grip actuator further causes the tensioning of the plurality of links.

The insertion tool of any preceding clause, wherein the elongated section includes a rigidizable guide tube, a snake arm robot, a flexible guide tube, a rigid guide tube, or a flexible blade rider.

The insertion tool of any preceding clause, wherein the grip actuator includes a rotatable knob, a switch, a button, a lever, or a twist mechanism coupled to the handle of the insertion tool.

The insertion tool of any preceding clause, wherein the grip actuator includes a foot switch or a knee-operated switch.

The insertion tool of any preceding clause, wherein the grip actuator includes an electrical switch activatable by voice control or gesture control.

The insertion tool of any preceding clause, wherein the grip mechanism includes vacuum suction, magnetic attraction, a ring, switchable adhesion, or radial compression.

The insertion tool of any preceding clause, wherein the grip mechanism includes a compressible elastomer that grips the implement when compressive force is applied.

The insertion tool of any preceding clause, wherein the grip mechanism includes a rotary screw or a linear compressor to apply the compressive force.

The insertion tool of any preceding clause, wherein the grip mechanism is coupled to the handle and/or the elongated section via a releasable coupling interface.

The insertion tool of any preceding clause, wherein the grip mechanism is integrated into the handle.

The insertion tool of any preceding clause, further including: a state indicator device to indicate a state of the grip mechanism.

The insertion tool of any preceding clause, wherein the state indicator device includes a color bar, a vacuum switch display, a pressure switch display, a haptic feature, an audio feedback feature, or a light indicator.

A tool assembly including the insertion tool of any preceding clause is provided. The tool assembly includes the implement inserted through the implement path of the elongated section.

The tool of assembly of any preceding clause, wherein the implement includes an end effector and a connector, and the grip mechanism grips a portion of the connector.

The tool of assembly of any preceding clause, wherein the end effector includes one or more of a camera, a cleaning tool, and a servicing tool.

The tool of assembly of any preceding clause, wherein the connector transmits one or more of control signals, electrical power, pneumatic energy, and mechanical energy to the end effector.

The tool of assembly of any preceding clause, wherein the grip mechanism is at least partially integrated into the implement.

## Claims

1. An insertion tool (102) for engine servicing comprising:
an elongated section (106) defining an implement path (108) extending from a proximal end (110) to a distal end (112);
a handle (104) coupled to the proximal end (110) of the elongated section (106);
a grip mechanism (132) coupled to the handle (104) and configured to selectively secure an implement (116) inserted into the implement path (108) through the handle (104); and
a grip actuator (134) operable to cause the grip mechanism (132) to secure the implement (116) to the handle (104).

2. The insertion tool (102) of claim 1, wherein the elongated section (106) comprises a plurality of rigidizable links (122) and the insertion tool (102) further comprises a rigidization actuator (150) for tensioning the plurality of links.

3. The insertion tool (102) of claim 2, wherein the rigidization actuator (150) is located on the handle (104) of the insertion tool (102).

4. The insertion tool (102) of claim 2 or 3, wherein the grip actuator (134) and the rigidization actuator (150) are integrated such that the operation of the grip actuator (134) further causes the tensioning of the plurality of links.

5. The insertion tool (102) of any preceding claim, wherein the elongated section (106) comprises a rigidizable guide tube, a snake arm robot, a flexible guide tube, a rigid guide tube, or a flexible blade rider.

6. The insertion tool (102) of any preceding claim, wherein the grip actuator (134) comprises a rotatable knob, a switch, a button, a lever, or a twist mechanism coupled to the handle (104) of the insertion tool (102).

7. The insertion tool (102) of any preceding claim, wherein the grip actuator (134) comprises a foot switch or a knee-operated switch.

8. The insertion tool (102) of any preceding claim, wherein the grip actuator (134) comprises an electrical switch activatable by voice control or gesture control.

9. The insertion tool (102) of any preceding claim, wherein the grip mechanism (132) comprises vacuum suction, magnetic attraction, a ring, switchable adhesion, or radial compression.

10. The insertion tool (102) of any preceding claim, wherein the grip mechanism (132) comprises a compressible elastomer (238) that grips the implement (216) when compressive force is applied.

11. The insertion tool (102) of claim 10, wherein the grip mechanism (132) includes a rotatory screw (264) or linear compressor to apply the compressive force.

12. The insertion tool (102) of any preceding claim, wherein the grip mechanism (132) is coupled to the handle (104) and/or the elongated section (106) via a releasable coupling interface (242).

13. The insertion tool (102) of any preceding claim, wherein the grip mechanism (132) is integrated into the handle (104).

14. The insertion tool (102) of any preceding claim, further comprising: a state indicator (148) device to indicate a state of the grip mechanism (132).

15. The insertion tool (102) of claim 14, wherein the state indicator (148) device comprises a color bar, a vacuum switch display, a pressure switch display, a haptic feature, an audio feedback feature, or a light indicator.
